# EUROPEAN PATENT APPLICATION

(11) **EP 4 002 829 A1**
(43) Date of publication of application: **25.05.2022**
(21) Application number: 20857422.8
(22) Date of filing: 28.08.2020
(51) Int. Cl.: H04N 5/232

(54) **IMAGE PROCESSING METHOD, ELECTRONIC DEVICE AND CLOUD SERVER**

(30) Priority: 30.08.2019 CN 201910817606
(71) Applicant: Huawei Technologies Co., Ltd., Longgang District Shenzhen, Guangdong 518129 (CN)
(72) Inventor: ZHANG, Shuai, Shenzhen, Guangdong 518129 (CN)
(74) Representative: Isarpatent
(86) International application number: PCT/CN2020/112204
(87) International publication number: WO 2021/037227

(57) **Abstract**

This application provides an image processing method, an electronic device, and a cloud server. The method is applied to the electronic device, the electronic device includes a camera and a display, and the method includes: The electronic device detects a first operation for enabling burst shooting; obtains, in response to the first operation, at least two groups of raw data collected by the camera, where each group of raw data corresponds to one image; sends the at least two groups of raw data to the cloud server, so that the cloud server generates, based on each group of raw data, a corresponding thumbnail and an image corresponding to the thumbnail; receives at least one thumbnail from the cloud server; displays the at least one thumbnail on a display; sends a request message to the cloud server after detecting a second operation for selecting a first thumbnail included in the at least one thumbnail, where the request message is used to request a first image corresponding to the first thumbnail; receives the first image from the cloud server; and displays the first image on the display. This solution helps improve a burst shooting function and improve user satisfaction.

## Description

### CROSS-REFERENCE TO RELATED APPLICATIONS

This application claims priority to Chinese Patent Application No. 201910817606.7, filed with the China National Intellectual Property Administration on August 30, 2019, and entitled "IMAGE PROCESSING METHOD, ELECTRONIC DEVICE, AND CLOUD SERVER", which is incorporated herein by reference in its entirety.

### TECHNICAL FIELD

This application relates to the field of image processing technologies, and in particular, to an image processing method, an electronic device, and a cloud server.

### BACKGROUND

Currently, a smartphone supports a burst shooting function, and may perform burst shooting in response to a user operation. The user operation may be an operation of touching and holding a shooting button, an operation of long pressing a volume down button, or the like.

Specifically, the smartphone performs burst shooting at a specific rate, for example, 10 frames per second. Generally, the smartphone stores all images that are automatically obtained at the specific rate within shooting duration. The shooting duration is duration in which a user touches and holds the shooting button or long presses the volume down button. However, because an existing burst shooting function is limited by a computing capability and a storage capability of the smartphone, burst shooting can be performed only for a short time, and a quantity of burst shot images that can be processed is limited. Consequently, such a burst shooting capability hardly meets a burst shooting requirement of the user.

### SUMMARY

Embodiments of this application provide an image processing method, an electronic device, and a cloud server, to help improve a burst shooting function.

According to a first aspect, an image processing method is provided, where the method is applied to an electronic device, the electronic device includes a camera and a display, and the method includes: The electronic device detects a first operation for enabling burst shooting; obtains, in response to the first operation, at least two groups of raw data collected by the camera, where each group of raw data corresponds to one image; sends the at least two groups of raw data to a cloud server, so that the cloud server generates, based on each group of raw data, a corresponding thumbnail and an image corresponding to the thumbnail; receives at least one thumbnail from the cloud server, where each thumbnail is generated based on a group of raw data; displays the at least one thumbnail on the display; detects a second operation for selecting a first thumbnail included in the at least one thumbnail; sends a request message to the cloud server in response to the second operation, where the request message is used to request a first image corresponding to the first thumbnail; receives the first image from the cloud server; and displays the first image on the display.

According to the method provided in this embodiment of this application, after collecting the raw data of the image, the electronic device uploads the data to the cloud server with a relatively strong processing capability to process the raw data, the cloud server generates the corresponding thumbnail and the image, and the electronic device does not need to process the raw data. A burst shooting function is no longer limited by a computing capability of the electronic device. Further, the cloud server may send the generated thumbnail to the electronic device, the electronic device may display the received thumbnail on the display, and the user selects a desired or interested thumbnail based on the thumbnail displayed on the display. Further, the electronic device is triggered to obtain, from the cloud server, an image corresponding to a desired or interested thumbnail selected by the user. In this way, the electronic device may locally store only the image desired by the user without storing all burst shot images, storage space is saved, the burst shooting function is no longer limited by a storage capability of the electronic device, and the burst shooting function is improved.

In a possible design, the at least one thumbnail sent by the cloud server to the electronic device is all thumbnails generated by the cloud server based on all raw data sent by the electronic device, and certainly may alternatively be thumbnails obtained by filtering by the cloud server.

In a possible design, before receiving the at least one thumbnail from the cloud server, the electronic device may further send a first command to the cloud server, where the first command is used to instruct the cloud server to generate, based on the raw data, the thumbnail and the image corresponding to the thumbnail. In this solution, in a scenario in which the cloud server may perform a plurality of types of processing based on the received raw data, the cloud server can generate, based on the raw data and the received first command, the thumbnail and the image corresponding to the thumbnail.

In a possible design, the first command includes a shooting mode and/or a resolution of an image captured by the camera, and the shooting mode includes a common shooting mode, a beauty shooting mode, or a wide aperture shooting mode. According to this solution, the cloud server may process the raw data based on a more precise requirement, for example, the shooting mode and/or the resolution of the image captured by the camera.

In a possible design, after receiving the first image from the cloud server, the electronic device may further store the first image, and may further send a second command to the cloud server, where the second command is used to instruct the cloud server to delete the first image and raw data used to generate the first image. By using the method, after obtaining the first image desired by a user from the cloud server, the electronic device may indicate the cloud server to delete the first image and the raw data used to generate the first image. After the user selects all desired images, the cloud server may delete all raw data received from the electronic device and the generated image, so that storage space utilization is improved.

According to a second aspect, another image processing method according to an embodiment of this application is applied to a cloud server, and the method includes: The cloud server receives at least two groups of raw data from an electronic device, where each group of raw data corresponds to one image; the cloud server generates one thumbnail and one image based on each group of raw data, where the thumbnail and the image generated based on the same raw data have a correspondence; the cloud server sends at least one thumbnail to the electronic device; the cloud server receives a request message from the electronic device, where the request message is generated after the electronic device detects, after the electronic device displays the at least one thumbnail on a display, a second operation for selecting a first thumbnail included in the at least one thumbnail, and the request message is used to request a first image corresponding to the first thumbnail; and the cloud server sends the first image to the electronic device in response to the request message.

According to the method provided in this embodiment of this application, the cloud server generates the thumbnail and the image based on the raw data collected by the electronic device, the electronic device does not need to process the raw data, and a burst shooting function is no longer limited by a computing capability of the electronic device. Further, the cloud server may send some or all of the generated thumbnails to the electronic device. The electronic device may display the received thumbnail on the display, and a user selects a desired image based on the thumbnail, to trigger the electronic device to obtain the desired image from the cloud server. In this way, the electronic device may locally store only the image desired by the user without storing all burst shot images, thereby saving storage space. In this way, the burst shooting function is no longer limited by a storage capability of the electronic device, thereby helping to improve the burst shooting function.

In a possible design, before generating one thumbnail and one image based on each group of raw data, the cloud server may further receive a first command from the electronic device, where the first command is used to instruct the cloud server to generate, based on the raw data, the thumbnail and the image corresponding to the thumbnail. In this solution, in a scenario in which the cloud server may perform a plurality of types of processing based on the received raw data, the cloud server can generate, based on the raw data and the received first command, the thumbnail and the image corresponding to the thumbnail.

In a possible design, the first command includes a shooting mode and/or a resolution of an image captured by the camera, and the shooting mode includes a common shooting mode, a beauty shooting mode, or a wide aperture shooting mode. Based on this design, the cloud server may generate one thumbnail and one image based on each group of raw data, and the shooting mode and/or the resolution of the image captured by the camera. By using this method, the cloud server may process the raw data based on a more precise requirement, for example, the shooting mode and/or the resolution of the image captured by the camera, to generate an image desired by a user.

In a possible design, after sending the first image to the electronic device, the cloud server may further receive a second command from the electronic device, where the second command is used to instruct the cloud server to delete the first image and raw data used to generate the first image, and after receiving the second command, the cloud server may delete, according to the second command, the first image and the raw data used to generate the first image. This saves storage space of the cloud server and improves storage space utilization.

According to a third aspect, an embodiment of this application provides an electronic device, where the electronic device includes a camera, a display, a transceiver, one or more processors, and a memory. The memory stores one or more computer programs, the one or more computer programs include instructions, and when the instructions are executed by the electronic device, the electronic device is enabled to perform the following steps:
detecting a first operation for enabling burst shooting; obtaining, in response to the first operation, at least two groups of raw data collected by the camera, where each group of raw data corresponds to one image; sending the at least two groups of raw data to a cloud server, so that the cloud server generates, based on each group of raw data, a corresponding thumbnail and an image corresponding to the thumbnail; receiving at least one thumbnail from the cloud server, where each thumbnail is generated based on a group of raw data; displaying the at least one thumbnail on the display; detecting a second operation for selecting a first thumbnail included in the at least one thumbnail; sending a request message to the cloud server in response to the second operation, where the request message is used to request a first image corresponding to the first thumbnail; receiving the first image from the cloud server; and displaying the first image on the display.

In a possible design, when the instructions are executed by the electronic device, before the electronic device receives the at least one thumbnail from the cloud server, the electronic device further performs the following step: sending a first command to the cloud server, where the first command is used to instruct the cloud server to generate, based on the raw data, the thumbnail and the image corresponding to the thumbnail.

In a possible design, the first command may include a shooting mode and/or a resolution of an image captured by the camera, and the shooting mode includes a common shooting mode, a beauty shooting mode, a wide aperture shooting mode, or the like.

In a possible design, when the instructions are executed by the electronic device, after the electronic device receives the first image from the cloud server, the electronic device further performs the following steps: storing the first image; and sending a second command to the cloud server, where the second command is used to instruct the cloud server to delete the first image and raw data used to generate the first image.

According to a fourth aspect, an embodiment of this application provides a cloud server, where the cloud server includes a transceiver, a processor, and a memory, where the memory stores one or more computer programs, the one or more computer programs include instructions, and when the instructions are executed by the cloud server, the cloud server is enabled to perform the following steps:
receiving at least two groups of raw data from an electronic device, where each group of raw data corresponds to one image; generating one thumbnail and one image based on each group of raw data, where the thumbnail and the image generated based on the same raw data have a correspondence; sending at least one thumbnail to the electronic device; receiving a request message from the electronic device, where the request message is generated after the electronic device detects, after the electronic device displays the at least one thumbnail on a display, a second operation for selecting a first thumbnail included in the at least one thumbnail, and the request message is used to request a first image corresponding to the first thumbnail; and sending the first image to the electronic device in response to the request message.

In a possible design, when the instructions are executed by the cloud server, before the cloud server generates one thumbnail and one image based on each group of raw data, the cloud server further performs the following step: receiving a first command from the electronic device, where the first command is used to instruct the cloud server to generate, based on the raw data, the thumbnail and the image corresponding to the thumbnail.

In a possible design, the first command may include a shooting mode and/or a resolution of an image captured by the camera, and the shooting mode includes a common shooting mode, a beauty shooting mode, a wide aperture shooting mode, or the like. The generating one thumbnail and one image based on each group of raw data includes: generating one thumbnail and one image based on each group of raw data, and the shooting mode and/or the resolution of the image captured by the camera.

In a possible design, when the instructions are executed by the cloud server, after the cloud server sends the first image to the electronic device, the cloud server further performs the following steps: receiving a second command from the electronic device, where the second command is used to instruct the cloud server to delete the first image and raw data used to generate the first image, and deleting, according to the second command, the first image and the raw data used to generate the first image.

According to a fifth aspect, an embodiment of this application provides an apparatus. The apparatus is included in an electronic device, and the apparatus has functions of implementing behavior of the electronic device in the method according to any one of the foregoing aspects of the method parts. The function may be implemented by hardware, or may be implemented by hardware executing corresponding software. The hardware or software includes one or more modules or units that correspond to the foregoing function.

According to a sixth aspect, an embodiment of this application provides an apparatus, including a cloud server, and the apparatus has a function of implementing behavior of the cloud server in the methods in any one of the foregoing method parts. The function may be implemented by hardware, or may be implemented by hardware executing corresponding software. The hardware or software includes one or more modules or units that correspond to the foregoing function.

According to a seventh aspect, an embodiment of this application provides a chip, where the chip is coupled to a memory in an electronic device, and performs the method according to the first aspect or any possible design in the first aspect.

According to an eighth aspect, an embodiment of this application provides a chip, where the chip is coupled to a memory in a cloud server, and performs the method according to any one of the second aspect or the possible designs of the second aspect.

According to a ninth aspect, an embodiment of this application provides a system, including an electronic device configured to perform the method in the first aspect or any possible design of the first aspect, and a cloud server configured to perform the method in the second aspect or any possible design of the second aspect.

According to a tenth aspect, an embodiment of this application provides a computer storage medium, where the computer storage medium stores program instructions, and when the program instructions are run on an electronic device, the electronic device is enabled to perform the method according to any one of the first aspect or the possible designs of the first aspect.

According to an eleventh aspect, an embodiment of this application provides a computer storage medium, where the computer storage medium stores program instructions, and when the program instructions are run on a cloud server, the cloud server is enabled to perform the method according to any one of the second aspect or the possible designs of the second aspect.

According to a twelfth aspect, an embodiment of this application provides a computer program product. When the computer program product runs on an electronic device, the electronic device is enabled to perform the method according to the first aspect or any possible design of the first aspect.

According to a thirteenth aspect, an embodiment of this application provides a computer program product. When the computer program product runs on a cloud server, the cloud server is enabled to perform the method according to any one of the second aspect or the possible designs of the second aspect.

In addition, for technical effects brought by the third aspect to the ninth aspect, refer to the related descriptions in the foregoing method parts. Details are not described herein again.

It should be noted that "coupling" in the embodiments of this application indicates a direct combination or an indirect combination between two components.

### BRIEF DESCRIPTION OF DRAWINGS

FIG. 1 is a schematic diagram of a structure of a system according to an embodiment of this application;
FIG. 2 is a schematic diagram of a structure of an electronic device according to an embodiment of this application;
FIG. 3 is a schematic diagram of a structure of a cloud server according to an embodiment of this application;
FIG. 4 is a schematic diagram of a graphical user interface according to an embodiment of this application;
FIG. 5 is a schematic diagram of a preview interface according to an embodiment of this application;
FIG. 6 is a schematic flowchart of an image processing method according to an embodiment of this application;
FIG. 7(a) to FIG. 7(f) are schematic diagrams of graphical user interfaces according to an embodiment of this application;
FIG. 8 is a schematic flowchart of another image processing method according to an embodiment of this application;
FIG. 9A and FIG. 9B are a schematic flowchart of still another image processing method according to an embodiment of this application;
FIG. 10A and FIG. 10B are a schematic flowchart of still another image processing method according to an embodiment of this application; and
FIG. 11 is a schematic diagram of a structure of another electronic device according to an embodiment of this application.

### DESCRIPTION OF EMBODIMENTS

The following specifically describes specific implementations of this application with reference to the accompanying drawings.

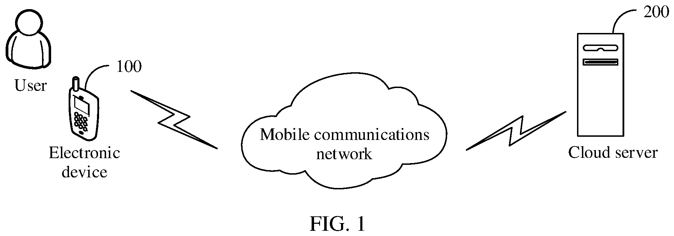

FIG. 1 is a schematic diagram of a system architecture according to an embodiment of this application. The system architecture shown in FIG. 1 includes an electronic device 100, a cloud server 200, and a mobile communications network. The electronic device 100 and the cloud server 200 may communicate by using the mobile communications network. The mobile communications network may be a second-generation mobile communications (2nd-generation, 2G) network, a third-generation mobile communications (3rd-generation, 3G) network, a fourth-generation mobile communications (4th-generation, 4G) network, a fifth-generation mobile communications (5th-generation, 5G) network, a future communications network, or the like.

In the embodiments of this application, the following describes the electronic device 100, a graphical user interface (graphical user interface, GUI) used for such an electronic device 100, and an embodiment used for using such an electronic device 100, and describes the cloud server 200 and an embodiment used for using such a cloud server 200. In some embodiments of this application, the electronic device 100 may be a portable electronic device having a function such as a camera, for example, a mobile phone, a tablet computer, a wearable device having a wireless communication function (for example, a smartwatch), or a vehicle-mounted device. The portable electronic device includes but is not limited to a portable electronic device that carries an IOS^{®}, Android^{®}, Microsoft^{®}, or another operating system. The portable electronic device may alternatively be a laptop (Laptop) or the like. It should be further understood that, in some other embodiments of this application, the electronic device 100 may alternatively be a desktop computer. In some embodiments of this application, the cloud server 200 may be one or more desktop computers, or the like.

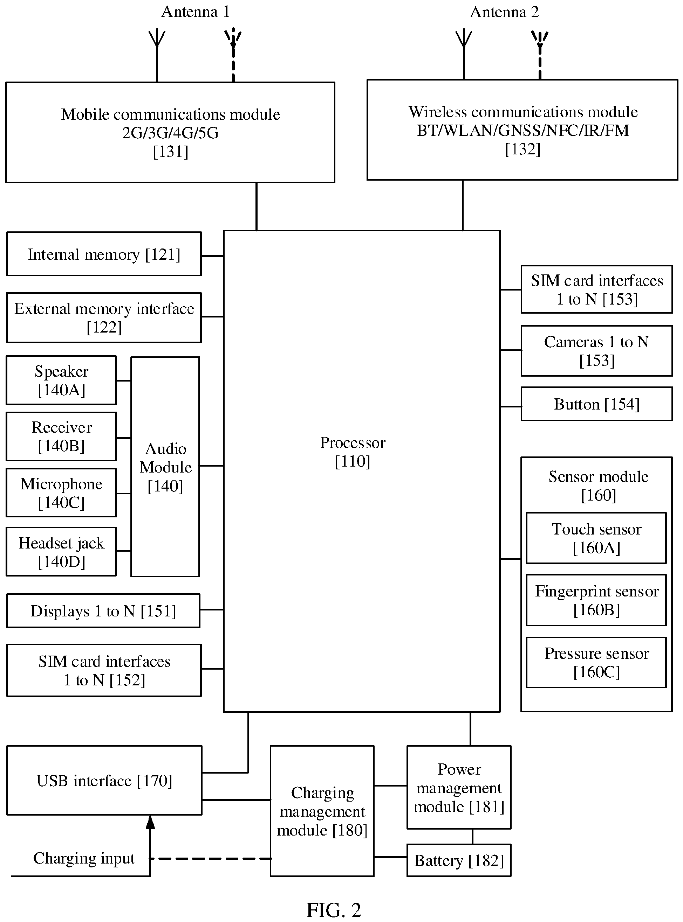

For example, FIG. 2 is a schematic diagram of a structure of an electronic device 100 according to an embodiment of this application. As shown in the figure, the electronic device 100 includes a processor 110, an internal memory 121, an external memory interface 122, an antenna 1, a mobile communications module 131, an antenna 2, a wireless communications module 132, an audio module 140, a speaker 140A, a receiver 140B, a microphone 140C, a headset interface 140D, a display 151, a subscriber identification module (subscriber identification module, SIM) card interface 152, a camera 153, a button 154, a sensor module 160, a universal serial bus (universal serial bus, USB) interface 170, a charging management module 180, a power management module 181, and a battery 182. In some other embodiments, the electronic device may further include a motor, an indicator, and the like.

The processor 110 may include one or more processing units. For example, the processor 110 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments, a memory may be further disposed in the processor 110, and is configured to store an instruction and data. For example, the memory in the processor 110 may be a cache. The memory may be configured to store an instruction or data just used or cyclically used by the processor 110. If the processor 110 needs to use the instruction or the data again, the processor 110 may directly invoke the instruction or the data from the memory. This helps avoid repeated access and reduces a waiting time of the processor 110, and improves system efficiency.

The internal memory 121 may be configured to store one or more computer programs, and the one or more computer programs include instructions. The processor 110 may run the foregoing instructions stored in the internal memory 121, so that the electronic device 100 performs the image processing method, other functional applications, data processing, and the like provided in some embodiments of this application. The internal memory 121 may include a program storage area and a data storage area. The program storage region may store an operating system. The program storage region may further store one or more application programs (for example, a gallery or a contact) and the like. The data storage area may store data (for example, an image or a contact) or the like created during use of the electronic device 100. In addition, the internal memory 121 may include a high-speed random access memory, and may further include a non-volatile memory, for example, one or more magnetic disk storage devices, a flash memory device, or a universal flash memory (universal flash storage, UFS). In some embodiments, the processor 110 may run the instructions stored in the internal memory 121 and/or the instructions stored in the memory disposed in the processor 110, to enable the electronic device to perform the image processing method provided in the embodiments of this application, other functional applications, and data processing.

The external memory interface 122 may be configured to connect to an external storage card (such as a micro SD card) to extend a storage capability of the electronic device. The external storage card communicates with the processor 110 through the external memory interface 122, to implement a data storage function. For example, files such as images, music, and videos are stored in the external memory card.

The antenna 1 and the antenna 2 are configured to transmit and receive electromagnetic wave signals. Each antenna in the electronic device may be configured to cover one or more communication frequency bands. Different antennas may further be multiplexed, to improve antenna utilization. For example, the antenna 1 may be multiplexed as a diversity antenna in a wireless local area network. In some other embodiments, the antenna may be used in combination with a tuning switch.

The mobile communications module 131 may provide a solution that is for wireless communication including 2G/ 3G/ 4G/ 5G and the like and that is applied to the electronic device. The mobile communications module 131 may include a filter, a switch, a power amplifier, a low noise amplifier (low noise amplifier, LNA), and the like.

The wireless communications module 132 may provide a solution that is applied to the electronic device and that includes wireless communication such as a WLAN (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communications module 132 may be one or more devices that integrate at least one communications processing module.

In some embodiments, the antenna 1 and the mobile communications module 131 of the electronic device are coupled, and the antenna 2 and the wireless communications module 132 of the electronic device are coupled, so that the electronic device can communicate with a network and another device by using a wireless communications technology. The wireless communications technology may include a global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device may implement audio functions, such as music play and recording, through the audio module 140, the speaker 140A, the receiver 140B, the microphone 140C, the headset interface 140D, the application processor, and the like. The audio module 140 may be configured to convert digital audio information into an analog audio signal for an output, and is also configured to convert an analog audio input into a digital audio signal. The audio module 140 may be further configured to encode and decode an audio signal. In some embodiments, the audio module 140 may be disposed in the processor 110, or some functional modules of the audio module 140 are disposed in the processor 110. The speaker 140A, also referred to as a "loudspeaker", is configured to convert an audio electrical signal into a sound signal. The electronic device may be used to listen to music or answer a call in a hands-free mode over the speaker 140A. The receiver 140B, also referred to as an "earpiece", is configured to convert an audio electrical signal into a sound signal. When using the electronic device to answer a call, a user may place the receiver 140B close to a human ear to answer a voice received by the electronic device through the mobile communications module 131 or the wireless communications module 132. The microphone 140C, also referred to as a "mike" or a "microphone", is configured to convert a sound signal into an electrical signal. When making a call or sending a voice message by using the electronic device, the user may make a sound near the microphone 140C through the mouth of the user, and the microphone 140C may be configured to collect a voice of the user and then convert the voice of the user into an electrical signal. At least one microphone 140C may be disposed in the electronic device. In some embodiments, two microphones 140C may be disposed in the electronic device, to collect a sound signal and implement a noise reduction function. In some other embodiments, three, four, or more microphones 140C may be disposed in the electronic device, to collect a sound signal, reduce noise, identify a sound source, implement a directional recording function, and the like. The headset interface 140D is configured to connect to a wired headset. The headset interface 140D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The electronic device may implement the display function through the GPU, the display 151, the application processor, and the like. The GPU is a microprocessor for image processing, and is connected to the display 151 and the application processor. The GPU is configured to: perform mathematical and geometric calculation, and perform graphics rendering. The processor 110 may include one or more GPUs that execute program instructions to generate or change display information.

The display 151 may be configured to display an image, a video, and the like. The display 151 may include a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a mini LED, a micro LED, a micro OLED, a quantum dot light emitting diode (quantum dot light emitting diodes, QLED), or the like. In some embodiments, the electronic device may include one or N displays 151, where N is a positive integer greater than 1.

The electronic device may implement a shooting function through the ISP, the camera 153, the video codec, the GPU, the display 151, the application processor, and the like. The ISP may be configured to process data fed back by the camera 153. For example, during shooting, a shutter is opened, an optical signal is collected by using the camera 153, and then the camera 153 converts the collected optical signal into an electrical signal, and transmits the electrical signal to the ISP for processing, to convert the electrical signal into an image visible to a naked eye. The ISP may further perform algorithm optimization on noise, brightness, and a skin color of the image. The ISP may further optimize parameters such as exposure and a color temperature of a shooting scene. In some embodiments, the ISP may be disposed in the camera 153. The camera 153 may be configured to capture a static image or a video. Usually, the camera 153 includes a lens and an image sensor. An optical image of an object is generated by using the lens and projected onto the image sensor. The image sensor may be a charge coupled device (charge coupled device, CCD) or a complementary metal-oxide-semiconductor (complementary metal-oxide-semiconductor, CMOS) phototransistor. The image sensor converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 153, where N is a positive integer greater than 1. For example, the electronic device may include two cameras 153, where one camera 153 is a front-facing camera, and the other camera 153 is a rear-facing camera. For another example, the electronic device may further include three cameras 153, where one camera 153 is a front-facing camera, and the other two cameras 153 are rear-facing cameras. Alternatively, one camera 153 is a rear-facing camera, and the other two cameras 153 are front-facing cameras. For another example, the electronic device includes four cameras 153, where one camera 153 is a front-facing camera, and the other three cameras 153 are rear-facing cameras.

The button 154 may include a power button, a volume button, or the like. The button 154 may be a mechanical button, or may be a touch button. The electronic device may receive a button input, and generate a button signal input related to a user setting and function control of the electronic device. For example, the electronic device includes a volume up button and a volume down button. Both the volume up button and the volume down button are mechanical buttons. The volume up button is used to control the electronic device to increase volume, and the volume down button is used to control the electronic device to decrease volume. In addition, in some other embodiments, when the display 151 displays a preview interface, the electronic device may perform burst shooting in response to the user long pressing the volume down button, to obtain a plurality of images collected by the camera.

The sensor module 160 may include one or more sensors, for example, a touch sensor 160A, a fingerprint sensor 160B, and a pressure sensor 160C. In some embodiments, the sensor module 160 may further include a gyroscope sensor, an environment sensor, a range sensor, an optical proximity sensor, a bone conduction sensor, an acceleration sensor, and the like.

The touch sensor 160A may also be referred to as a "touch panel". The touch sensor 160A may be disposed on the display 151, and the touch sensor 160A and the display 151 constitute a touchscreen, which is also referred to as a "touch screen". The touch sensor 160A is configured to detect a touch operation acting on or near the touch sensor. The touch sensor 160A may transmit the detected touch operation to the application processor, to determine a type of a touch event. The display 151 may provide a visual output related to the touch operation. In some other embodiments, the touch sensor 160A may alternatively be disposed on a surface of the electronic device at a position different from that of the display 151.

In some other embodiments, the processor 110 may alternatively include one or more interfaces. For example, the interface may be the SIM card interface 152. For another example, the interface may be alternatively the USB interface 170. For still another example, the interface may be alternatively an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), or a general-purpose input/output (general-purpose input/output, GPIO) interface. It may be understood that, in this embodiment of this application, the processor 110 may be connected to different modules of the electronic device by using interfaces, so that the electronic device can implement different functions, for example, shooting and processing. It should be noted that a connection manner of an interface in the electronic device is not limited in this embodiment of this application.

It should be understood that the hardware structure shown in FIG. 2 is merely an example. The electronic device in this embodiment of this application may have more or fewer components than those shown in FIG. 2, may combine two or more components, or may have different component configurations. The components shown in FIG. 2 may be implemented in hardware including one or more signal processing and/or application-specific integrated circuits, software, or a combination of hardware and software.

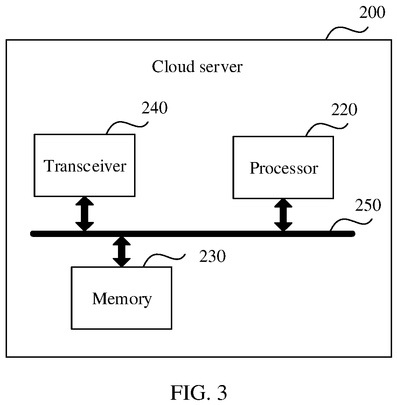

For example, FIG. 3 is a schematic diagram of a structure of a cloud server 200 according to an embodiment of this application. Specifically, as shown in the figure, the cloud server 200 may include at least one processor 220. In this embodiment of this application, the at least one processor 220 is configured to control and manage an action of the cloud server 200. For example, the at least one processor 220 may be configured to support the cloud server 200 in generating one thumbnail and one image based on each group of raw data received from the electronic device 100 in this embodiment. Optionally, the cloud server 200 may further include a memory 230 and a transceiver 240. The at least one processor 220, the memory 230, and the transceiver 240 may be connected to each other or connected to each other by using a bus 250. The memory 230 is configured to store code and data of the cloud server 200. The transceiver 240 is configured to support the cloud server 200 in communicating with another device, for example, the electronic device 100.

The following specifically describes each component of the cloud server 200.

The processor 220 is a control center of the cloud server, and may be one processor or may be a collective name of a plurality of processing elements. For example, the processor 220 is a central processing unit (central processing unit, CPU), or an application-specific integrated circuit (application-specific integrated circuit, ASIC), or is configured as one or more integrated circuits for implementing the embodiments of the present invention, for example, one or more microprocessors (digital signal processor, DSP) or one or more field programmable gate arrays (field programmable gate array, FPGA).

The processor 220 may perform various functions of the cloud server by running or executing the software program stored in the memory 230 and invoking data stored in the memory 230.

The memory 230 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a blue-ray optical disc, and the like), or a magnetic disk storage medium or another magnetic storage device, or any other medium that can carry or store expected program code in a form of an instruction or a data structure and that can be accessed by a computer, but is not limited thereto. The memory 230 may exist independently, or may be connected to the processor 220 by using the bus 250. Alternatively, the memory 230 may be integrated with the processor 220.

By using any apparatus such as a transceiver, the transceiver 240 is configured to communicate with the electronic device shown in FIG. 1, and certainly may alternatively communicate with another device. The transceiver 240 may be further configured to communicate with a communications network, such as the Ethernet, a radio access network (radio access network, RAN), or a wireless local area network (wireless local area networks, WLAN). The transceiver 240 may include a receiving unit for implementing a receiving function and a sending unit for implementing a sending function.

The bus 250 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

It should be understood that the hardware structure shown in FIG. 2 is merely an example, and does not constitute a limitation on the cloud server 200. The cloud server in this embodiment of this application may have more or fewer components than those shown in FIG. 2, may combine two or more components, or may have different component configurations.

Usually, a user wants to record some beautiful moments by taking photos, but it is difficult to capture an optimal image through shooting one by one. To increase a possibility of the electronic device 100 for capturing an optimal image by using the camera 153 in these special scenarios, the user usually uses the electronic device 100 to perform burst shooting. For example, in a scenario in which the user wants to shoot a peacock that is spreading its tail, when the camera 153 collects an image of the peacock that is spreading its tail, the electronic device 100 may perform burst shooting to increase a possibility of capturing an optimal image. However, because a computing capability and a storage capability of the electronic device 100 are limited, the electronic device 100 can only perform burst shooting for a short time, and a quantity of burst shot images that can be processed is limited. Consequently, such a burst shooting capability hardly meets a burst shooting requirement of the user, and user experience is poor.

In view of the foregoing problems, an embodiment of this application provides an image processing method. According to the method, when performing a burst shooting function, an electronic device may send collected raw data to a cloud server, the cloud server generates a corresponding thumbnail and an image, and the electronic device does not need to process the raw data. In this case, the burst shooting function is no longer limited by a computing capability of the electronic device. Further, the cloud server may send the generated thumbnail to the electronic device, the electronic device may display the received thumbnail on a display, and a user selects an interested image based on the thumbnail, and triggers the electronic device to obtain the image from the cloud server. In this case, the electronic device may locally store only the image that the user is interested in, and does not need to store all burst shot images. Therefore, storage space can be saved, and the burst shooting function is no longer limited by a storage capability of the electronic device. This helps improve the burst shooting function, and further improve user experience.

The following describes in detail the embodiments of this application with reference to the system shown in FIG. 1, the electronic device shown in FIG. 2, and a schematic diagram of a structure of the cloud server shown in FIG. 3.

In the embodiments of this application, "at least one" means one or more, and "a plurality of' means two or more. The term "and/or" in this specification describes only an association relationship for describing associated objects and represents that three relationships may exist. For example, A and/or B may represent the following three cases: Only A exists, both A and B exist, and only B exists. A and B may be singular or plural. The character "/" usually represents an "or" relationship between associated objects. "At least one of the following items (pieces)" or a similar expression thereof indicates any combination of these items, including any combination of singular items (pieces) or plural items (pieces). For example, at least one of a, b, and c may indicate a, b, c, a and b, a and c, b and c, or a, b, and c, where a, b, and c may be singular or plural.

Reference to "an embodiment", "some embodiments", or the like described in this application indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized. The terms "include", "comprise", "have", and their variants all mean "include but are not limited to", unless otherwise specifically emphasized.

In the system architecture shown in FIG. 1, a user may perform a burst shooting operation by using the electronic device 100. Because a burst shooting function of the electronic device 100 is limited by a computing capability and a storage capability, burst shooting can be performed only for a short time, and a quantity of burst shot images that can be processed is limited. Consequently, such a burst shooting capability hardly meets a burst shooting requirement of the user. To improve the burst shooting function, in the embodiments of this application, after the user triggers a burst shooting operation on the electronic device 100, the electronic device 100 may send raw data collected for an image to the cloud server 200. The cloud server 200 generates corresponding thumbnails and images based on the raw data, and the electronic device 100 does not need to process the raw data. In this case, the burst shooting function is no longer limited by a computing capability of the electronic device 100. After generating the thumbnails based on the raw data received from the electronic device 100, the cloud server 200 may send all or some of the generated thumbnails to the electronic device 100. The electronic device 100 may display the received thumbnails on a display. The user selects a desired image based on the thumbnails, and triggers the electronic device 100 to obtain the desired image from the cloud server 200. In this case, the electronic device 100 may locally store only the image desired by the user instead of storing all burst shot images. Therefore, storage space can be saved, and the burst shooting function is no longer limited by a storage capability of the electronic device 100. This helps improve the burst shooting function.

It is assumed that the electronic device 100 collects 90 groups of raw data for images. For example, after the user triggers the burst shooting operation on the electronic device 100, the electronic device 100 may send the 90 groups of raw data collected for the images to the cloud server 200, and the cloud server 200 may generate one corresponding thumbnail and one corresponding image based on each group of raw data. There is a correspondence between a thumbnail and an image generated based on a same group of raw data. To be specific, in this process, 90 thumbnails and 90 images are generated in total, and one thumbnail corresponds to one image. After generating the 90 thumbnails, the cloud server 200 may send all or some of the generated thumbnails to the electronic device 100, the electronic device 100 may display the received thumbnails on the display, and the user may select an interested thumbnail from the thumbnails displayed on the display. After detecting the thumbnail selected by the user, the electronic device 100 may obtain, from the cloud server 200, an image corresponding to the thumbnail selected by the user. For example, after detecting a first thumbnail selected by the user, the electronic device 100 may obtain, from the cloud server 200, a first image corresponding to the first thumbnail. For another example, after detecting that the user selects a thumbnail A, a thumbnail B, a thumbnail C, a thumbnail D, and a thumbnail E, the electronic device 100 may obtain, from the cloud server 200, images respectively corresponding to the thumbnail A, the thumbnail B, the thumbnail C, the thumbnail D, and the thumbnail E. This helps improve the burst shooting function.

In some other embodiments, before receiving at least one thumbnail from the cloud server 200, the electronic device 100 may further send a first command to the cloud server 200, where the first command is used to instruct the cloud server 200 to generate, based on the raw data, a thumbnail and an image corresponding to the thumbnail. In this way, in a scenario in which the cloud server 200 may perform a plurality of types of processing based on the received raw data, the cloud server 200 can generate, based on the raw data and the received first command, the thumbnail and the image corresponding to the thumbnail.

In still some embodiments, the first command may include a shooting mode and/or a resolution of an image captured by the camera, and the shooting mode includes a common shooting mode, a beauty shooting mode, or a wide aperture shooting mode. In this case, the cloud server 200 may generate one thumbnail and one image based on each group of raw data, and the shooting mode and/or the resolution of the image captured by the camera. In this way, the cloud server 200 can process the raw data based on a more precise requirement, for example, the shooting mode and/or the resolution of the image captured by the camera, to generate an image desired by the user.

In still some embodiments, after receiving the image from the cloud server 200, the electronic device 100 may further store the image, and may further send a second command to the cloud server 200, where the second command is used to instruct the cloud server 200 to delete the image and raw data used to generate the image. After receiving the second command, the cloud server 200 may delete, according to the second command, the image and the raw data used to generate the image. After the user selects the desired image, the cloud server 200 may delete the corresponding image and the corresponding raw data. This saves storage space of the cloud server and improves storage space utilization.

Usually, the electronic device may support a plurality of applications, for example, one or more of the following applications: Camera, Gallery, Drawing, Presentation, Word Processing, Games, Phone, Video Player, Music Player, Email, Instant Messaging, Browser, Calendar, Clock, Payment, APP Store, Desktop, Health Management, and the like.

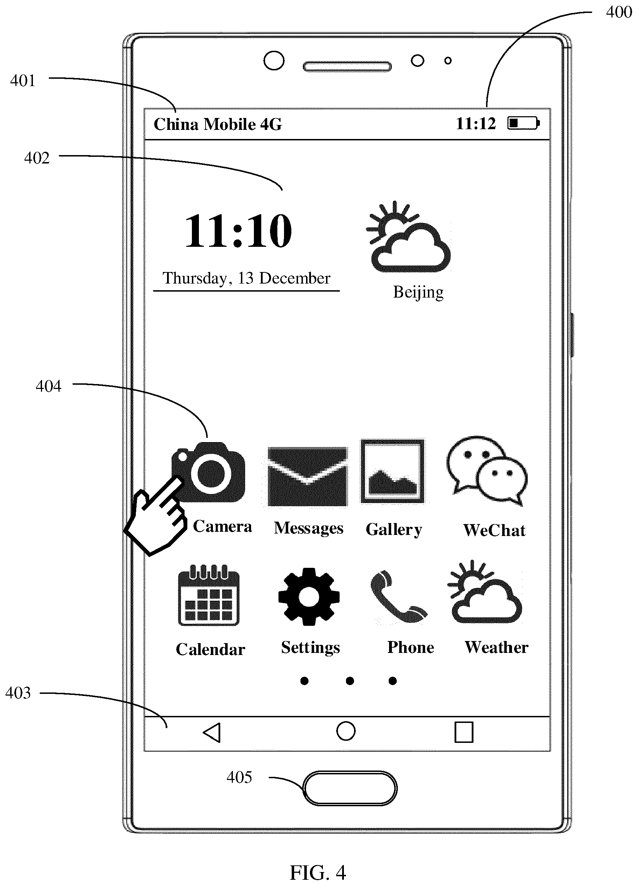

For example, FIG. 4 is a schematic diagram of a graphical user interface according to an embodiment of this application. The graphical user interface is referred to as a user interface below. The electronic device 100 displays the user interface by using the display 151. Specifically, the user interface may be a home screen, the leftmost screen, a user interface of an application, or the like. For example, the home screen may be a user interface 400 shown in FIG. 4. As shown in FIG. 4, the user interface 400 may include a status bar 401, a time and weather widget (web widget, Widget) 402, a hidden navigation bar 403, and icons of a plurality of applications such as a camera icon 404. The status bar 401 may include a name of an operator (China Mobile), a mobile network (for example, 4G), time, and a remaining battery level. In some other embodiments of this application, the status bar 401 may further include one or more of a Bluetooth icon, a Wi-Fi icon, a signal strength icon, a screen lock icon, an icon of an externally connected device, and the like. The navigation bar 403 may include a back button (back button), a home button (home button), and a recent button (menu button). It may be further understood that in some other embodiments, the user interface 400 may further include a dock bar. The dock bar may include icons of commonly used applications, for example, a phone icon, a messages icon, an email icon, and a weather icon. It should be noted that the user may set icons of commonly used applications in the dock bar based on a requirement of the user.

In some other embodiments, as shown in FIG. 4, the electronic device 100 may include a home button 405. The home button 405 may be a physical button, or may be a virtual button. The home button 405 is configured to: based on an operation of the user, return to the home screen from a user interface displayed on the display 151 such as a user interface of an application or the leftmost screen. This can help the user view the home screen at any time and perform an operation on a control (for example, an icon) on the home screen. The operation may be specifically performed by the user by pressing the home button 405. In some other embodiments of this application, the home button 405 may be further integrated with the fingerprint sensor 160B. Therefore, when the user presses the home button 405, the electronic device 100 may collect a fingerprint to confirm an identity of the user. In some other embodiments, the electronic device 100 may not include the home button 405.

It should be understood that, in the following embodiment, after detecting a touch operation performed by the user by using a finger (or a stylus or the like) on an icon of an application, the touch sensor 160A of the electronic device 100 reports the touch operation to the processor 110, so that the processor 110 starts the application in response to the touch operation, and the electronic device 100 displays a user interface of the application on the display 151. For example, after detecting a touch operation on the camera icon 404, the touch sensor 160A reports the touch operation on the camera icon 404 to the processor 110, so that the processor 110 starts, in response to the touch operation, an application (which may be referred to as a "camera application" for short below) corresponding to the camera icon 404, and the electronic device 100 displays, a user interface of the camera application, for example, a preview interface, on the display 151. An image captured by the camera 153 is displayed on the preview interface. It should be noted that in this embodiment of this application, the camera 153 may be a front-facing camera, or may be a rear-facing camera. For example, the camera 153 is the rear-facing camera. The camera 153 may include one rear-facing camera, or may include two or more rear-facing cameras. For example, if the camera 153 includes two rear-facing cameras, an image displayed on the preview interface is synthesized from images collected by the two rear-facing cameras. In addition, it should be further noted that the electronic device 100 may further start the camera application in response to another operation such as a shortcut gesture operation (for example, swiping down with three fingers) or a voice instruction (for example, "open the camera"), and display the user interface (for example, the preview interface) of the camera application on the display 151. It should be noted that, when the screen is black, the screen is locked, or the screen is unlocked and displays a user interface, the electronic device 100 may start the camera application in response to the shortcut gesture operation, the voice instruction, or the like, and display the user interface of the camera application on the display 151.

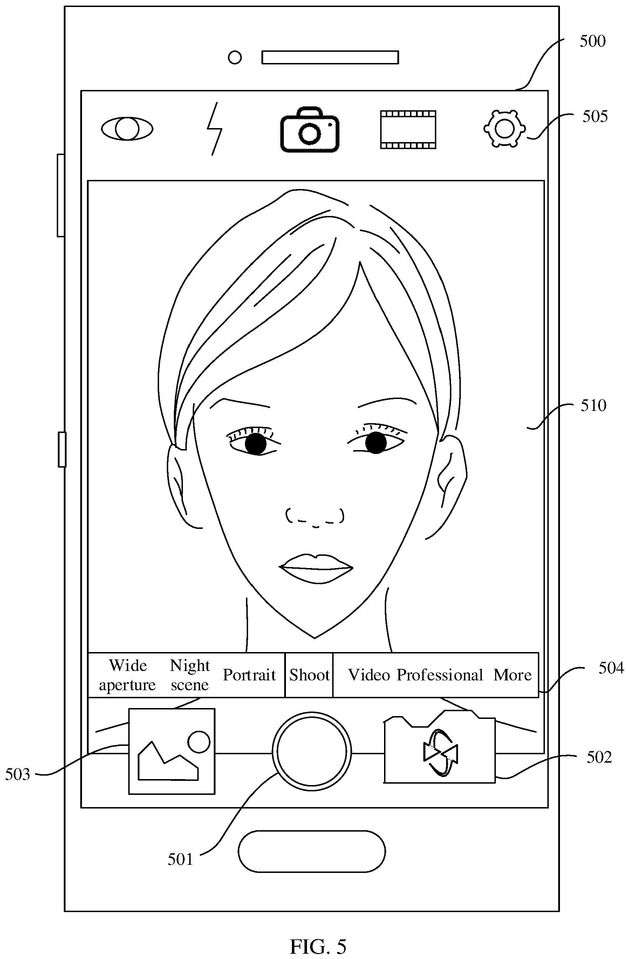

For example, the preview interface may be a user interface 500 shown in FIG. 5. As shown in FIG. 5, the user interface 500 includes a shooting button 501 and a preview area 510. The preview area 510 is configured to display an image captured by the camera 153. In response to a shooting operation of the user on the shooting button 501 (for example, tap, touch and hold, or press), the electronic device 100 may obtain one or more images collected by the camera 153, that is, store the one or more images in the internal memory 121. Specifically, when the camera 153 includes two rear-facing cameras, in response to an operation of the user on the shooting button 501, the electronic device 100 may store images separately captured by the two rear-facing cameras. Alternatively, the electronic device 100 may store a synthesized image, where the synthesized image is obtained by combining one or more images captured by the two rear-facing cameras. It may be understood that, in the embodiments of this application, the shooting operation may be specifically a burst shooting operation, for example, an operation that the user touches and holds or presses the shooting button 501. In response to the burst shooting operation, the electronic device may obtain, at a specific rate, a plurality of images collected by the camera 153. The specific rate is a rate at which the camera 153 captures images during burst shooting by the electronic device. For example, the specific rate may be 6 frames per second, 8 frames per second, or 10 frames per second. The specific rate may be set by the user, or may be a default setting in the electronic device. The burst shooting operation may be a touch and hold operation, that is, a touch operation that the user taps and holds the shooting button 501 by using a finger within a preset time. Alternatively, the burst shooting operation may be a pressing operation, that is, a touch operation that the user taps and holds the shooting button 501 by using a finger within a preset time. Alternatively, the burst shooting operation may be a pressing operation, that is, a touch operation that the user presses the shooting button 501 by using a finger with pressure reaching a preset pressure threshold.

In some embodiments, the electronic device ends the burst shooting only after the foregoing burst shooting operation ends. For example, the electronic device ends the burst shooting when the foregoing touch and hold operation ends (for example, the user raises the finger from the touchscreen).

It should be noted that, in the embodiments of this application, the electronic device 100 may further perform burst shooting in response to another operation (for example, a shortcut gesture operation, a voice input, or an operation of long pressing a volume down button). An operation manner of triggering the electronic device 100 to perform burst shooting is not limited in the embodiments of this application.

In some other embodiments of this application, the user interface 500 may further include a button 502, a button 503, an area 504, or some function buttons (for example, a setting button 505 and a flash button). The button 502 is configured to control mutual switching between the front-facing camera and the rear-facing camera, the button 503 is configured to quickly open the gallery, and an image displayed in an area of the button 503 is expressed as a thumbnail in this application, and may be understood as an image that is compressed proportionally based on a formal image. The area 504 may include a shooting mode button, a video mode button, a professional mode button, a portrait mode button, a wide aperture mode button, a night scene mode button, a more button, and the like. This helps the user use the electronic device to obtain an expected image, view the obtained image, and the like, and helps improve user experience.

The following describes in detail the image processing method provided in the embodiments of this application with reference to the schematic diagrams of the system shown in FIG. 1, the electronic device shown in FIG. 2, and the cloud server shown in FIG. 3.

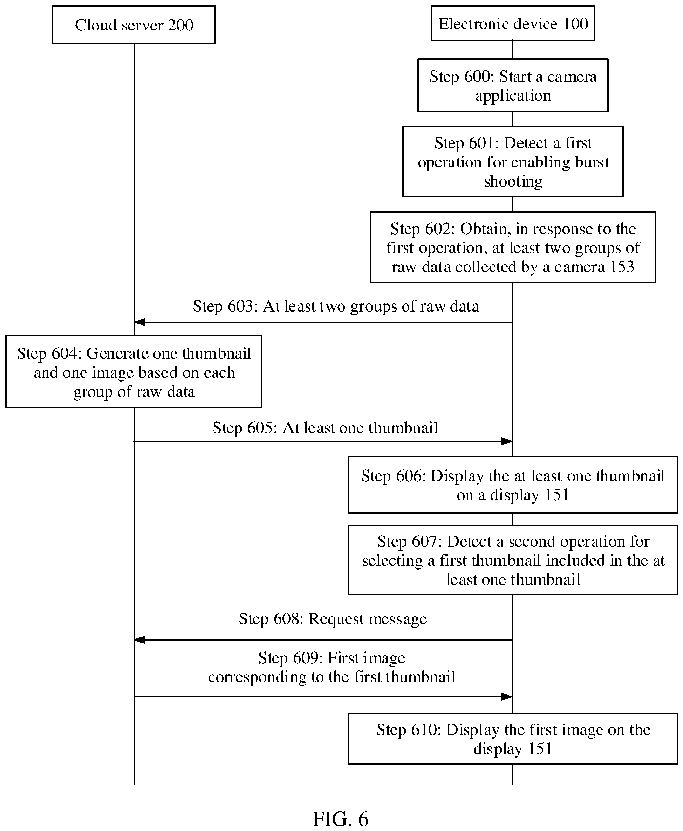

For example, FIG. 6 is a schematic flowchart of an image processing method according to an embodiment of this application. The method may be applied to the system shown in FIG. 1. When the method is applied to the system shown in FIG. 1, an electronic device in the method may be the electronic device 100 in FIG. 1, and a cloud server in the method may be the cloud server 200 in FIG. 1. The method may also be applied to the electronic device 100 shown in FIG. 2, or may be applied to the cloud server 200 shown in FIG. 3. The following uses an example in which the electronic device in the method is the electronic device 100 shown in FIG. 2, and the cloud server is the cloud server 200 shown in FIG. 3. The method may include the following steps.

Step 600: The electronic device 100 starts a camera application. It should be noted that, for a manner in which the electronic device 100 starts the camera application, refer to the foregoing description. Details are not described herein again.

Step 601: The electronic device 100 detects a first operation for enabling burst shooting. For example, the first operation may be a touch and hold operation performed by a user on a shooting button, an operation of long pressing a volume down button, a gesture operation of quickly enabling burst shooting, or a voice input operation for burst shooting. For a specific operation for burst shooting, refer to the foregoing introduction and description of FIG. 5. Details are not described herein again.

Step 602: In response to the first operation, the electronic device 100 obtains at least two groups of raw data collected by a camera 153, where each group of raw data corresponds to one image. It may be understood that each group of raw data corresponds to one frame of image. For example, the raw data collected by the camera 153 may be data in a luminance-bandwidth-chrominance (luminance-bandwidth-chrominance, YUV) format or data in a red-green-blue (red-green-blue, RGB) format. "YUV" is divided into three components. "Y" indicates luminance (luminance or luma), that is, a gray value. "U" and "V" indicate chrominance (chrominance or chroma), used to describe an image color and saturation and specify a color of a pixel.

Step 603: The electronic device 100 sends the at least two groups of raw data collected by using the camera 153 to the cloud server 200, so that the cloud server 200 generates, based on each group of raw data, a corresponding thumbnail and an image corresponding to the thumbnail. For example, before performing step 603, the electronic device 100 may first establish a connection to the cloud server 200.

Step 604: The cloud server 200 generates one thumbnail (Thumbnail) and one image based on each group of raw data. There is a correspondence between a thumbnail and an image that are generated based on same raw data. For ease of distinguishing and description, the image may be described as a formal image in this application. The formal image may be in a ".jpg" format. In this application, the thumbnail may be understood as a miniature of the formal image, or may be described as a scale-down image. A size and a resolution of the thumbnail may be less than those of the formal image. For example, if the cloud server 200 receives 90 groups of raw data from the electronic device 100, the cloud server 200 may generate one thumbnail and one image based on each of the 90 groups of raw data, and generate 90 thumbnails and 90 images in total. In the 90 thumbnails and the 90 images, there is a correspondence between a thumbnail and an image that are generated based on a same group of raw data. It should be noted that, in this application, a thumbnail may be generated based on raw data, or may be generated based on a formal image. This is not limited.

In some possible instances, before step 604 is performed, the electronic device 100 may further send a first command to the cloud server 200, where the first command is used to instruct the cloud server 200 to generate the thumbnail and the image based on the raw data. In this case, the cloud server 200 may perform a plurality of types of processing based on the raw data. For example, the cloud server 200 may perform processing A, processing B, or processing in this application based on the raw data. The cloud server 200 may perform the processing in this application according to the first command.

Because an existing burst shooting function is limited by a computing capability and a storage capability of the electronic device 100, burst shooting can be performed only for a short time, and a quantity of burst shot images that can be processed is limited. In addition, the existing burst shooting function is limited by a processing capability, and cannot be used in an image shooting mode such as a beauty shooting mode or a wide aperture shooting mode that requires complex algorithm processing. Based on this, this application provides the following: When sending the raw data to the cloud server 200, the electronic device 100 may further send a shooting mode currently selected by the user, for example, a common shooting mode, a beauty shooting mode, or a wide aperture shooting mode to the cloud server 200. In this way, the cloud server 200 can generate an image and a thumbnail based on an algorithm corresponding to the corresponding shooting mode, and the burst shooting function of the electronic device is extended to a shooting mode such as the beauty shooting mode or the wide aperture shooting mode that requires complex algorithm processing. A user's preference can be better met, and user experience can be improved. Optionally, the shooting mode may be carried in the first command.

In some possible instances, the first command may include a shooting mode and/or a resolution of an image captured by the camera 153. The shooting mode may include but is not limited to the common shooting mode, the beauty shooting mode, the wide aperture shooting mode, or the like. Based on this implementation, in step 604, the cloud server 200 may generate one thumbnail and one image based on each group of raw data, and the shooting mode and/or the resolution of the image captured by the camera 153. For example, when the first command includes the beauty shooting mode and the resolution of the image captured by the camera 153, and the shooting mode is the beauty shooting mode, the cloud server 200 may generate, based on a preset beauty algorithm, a corresponding thumbnail and image based on each group of raw data and the resolution. It should be noted that the preset beauty algorithm may be pre-determined by the user and stored on the cloud server 200, or may be negotiated between the cloud server 200 and the electronic device 100 in real time. According to this method, the burst shooting function can be used in the shooting mode such as the beauty shooting mode or the wide aperture shooting mode. Such a method in which an algorithm processing function of the electronic device 100 is migrated to and performed by the cloud server 200 breaks the limitations on the computing capability and the storage capability of the electronic device 100. This can enhance an effect of the burst shooting function, and increase application scenarios.

Step 605: The cloud server 200 sends at least one thumbnail to the electronic device 100, and correspondingly, the electronic device 100 receives the at least one thumbnail from the cloud server 200. For example, the cloud server 200 may send all or some of the generated thumbnails to the electronic device 100. Still with reference to the example in step 604, the cloud server 200 may send all of the 90 thumbnails to the electronic device 100, or may send some of the 90 thumbnails to the electronic device 100. In some possible instances, after generating the thumbnails and the formal images, the cloud server 200 may filter some of the thumbnails and the formal images according to a preset rule, and send filtered thumbnails to the electronic device 100. For example, the cloud server 200 may filter out formal images whose picture quality is high, that is, formal images that are not blurred, and send thumbnails corresponding to the formal images to the electronic device 100.

Step 606: The electronic device 100 displays, on a display 151, the at least one thumbnail received from the cloud server 200. The user may select a thumbnail that the user is interested in from the at least one thumbnail displayed on the display 151. Still with reference to the example in step 604, if the cloud server 200 sends all of the 90 thumbnails to the electronic device 100, the electronic device 100 may display the 90 thumbnails on the display 151 in batches, and the user may select an interested thumbnail from the 90 thumbnails displayed on the display 151. If the cloud server 200 sends 30 thumbnails in the 90 thumbnails to the electronic device 100, the electronic device 100 may display the 30 thumbnails on the display 151 in batches, and the user may select an interested thumbnail from the 30 thumbnails displayed on the display 151. For example, the electronic device 100 may display a plurality of thumbnails on the display 151 in batches in a form of a list. For example, four thumbnails may be first displayed in the list, and when other thumbnails need to be displayed, the user may slide the displayed list to display a batch of new images.

Step 607: The electronic device 100 detects a second operation for selecting a first thumbnail included in the at least one thumbnail. For example, the second operation may be that the user taps, touches and holds, or slides the first thumbnail. It may be understood that there may be a plurality of first thumbnails in this application.

Step 608: The electronic device 100 sends a request message to the cloud server 200 in response to the second operation, where the request message is used to request a first image corresponding to the first thumbnail.

Step 609: The cloud server 200 sends the first image to the electronic device 100, and correspondingly, the electronic device 100 receives the first image from the cloud server 200.

Step 610: The electronic device 100 displays the first image on the display 151, so that the user can conveniently view or further select an interested image. For example, if there are 20 first images, the 20 images may be displayed on the display 151 one by one. The user may further select an image that the user is more interested in from the 20 images, or select an image that is considered to be optimal by the user. Further, the user may choose to delete an image that the user is not interested in. In this way, storage space of the electronic device 100 can be saved.

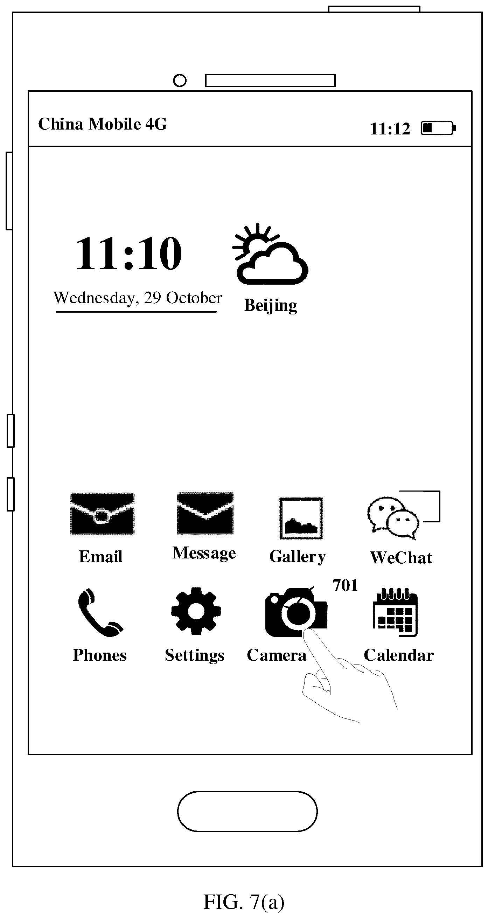

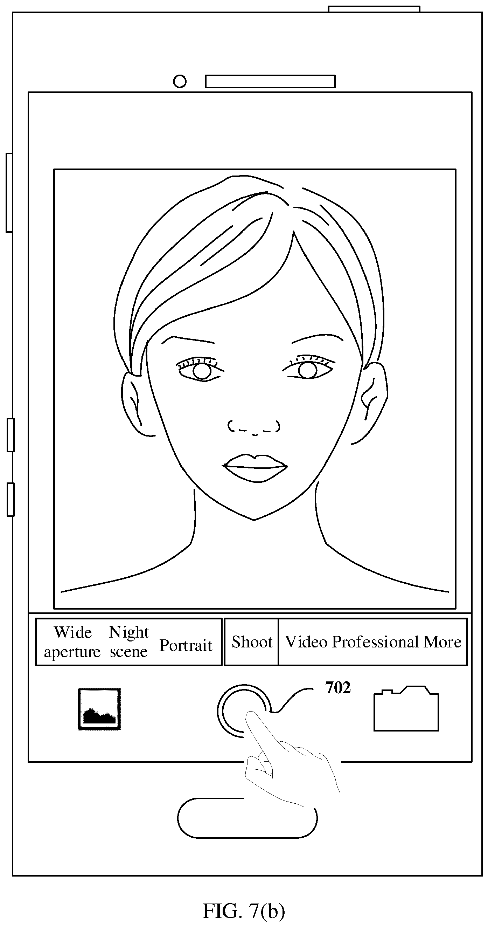

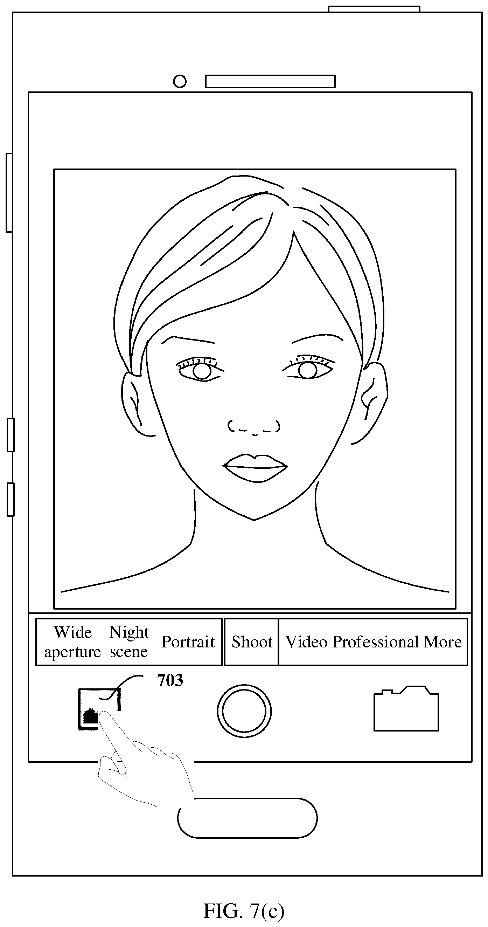

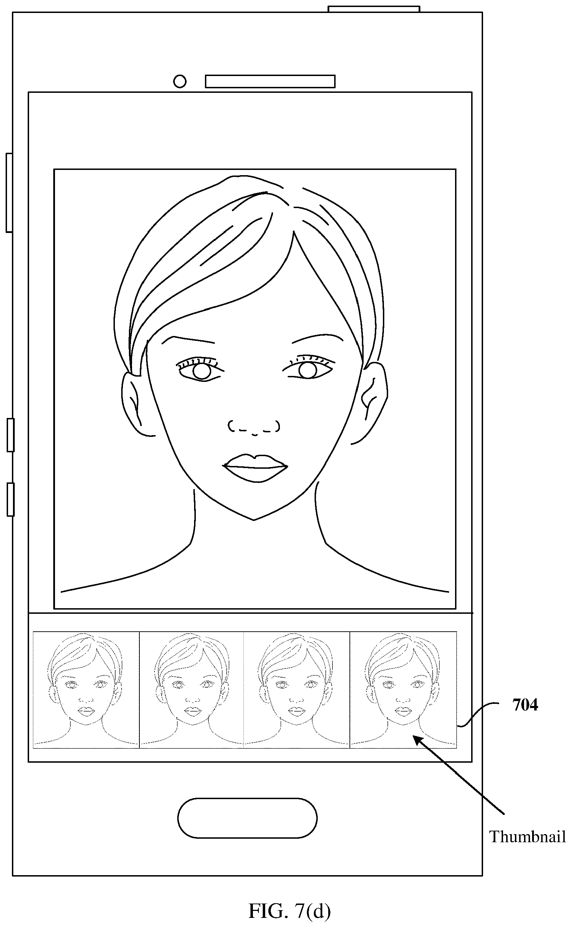

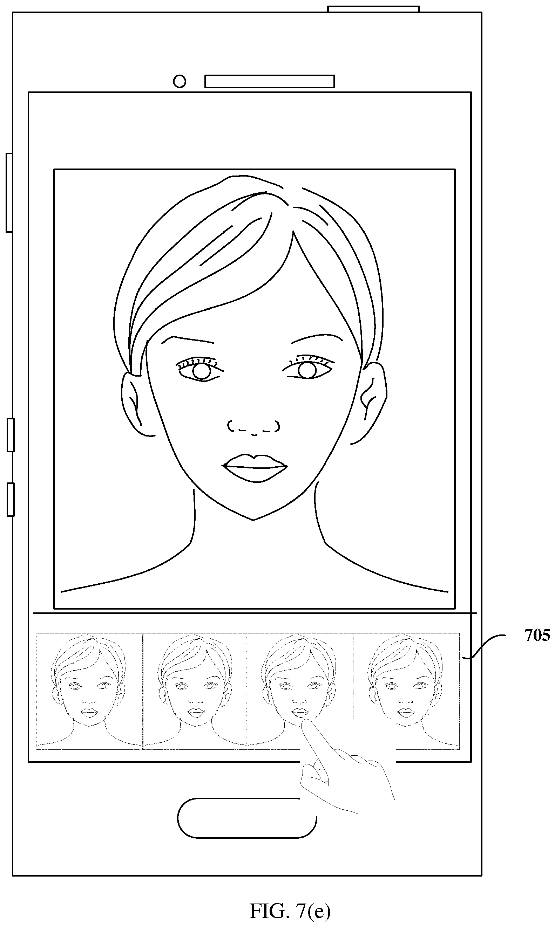

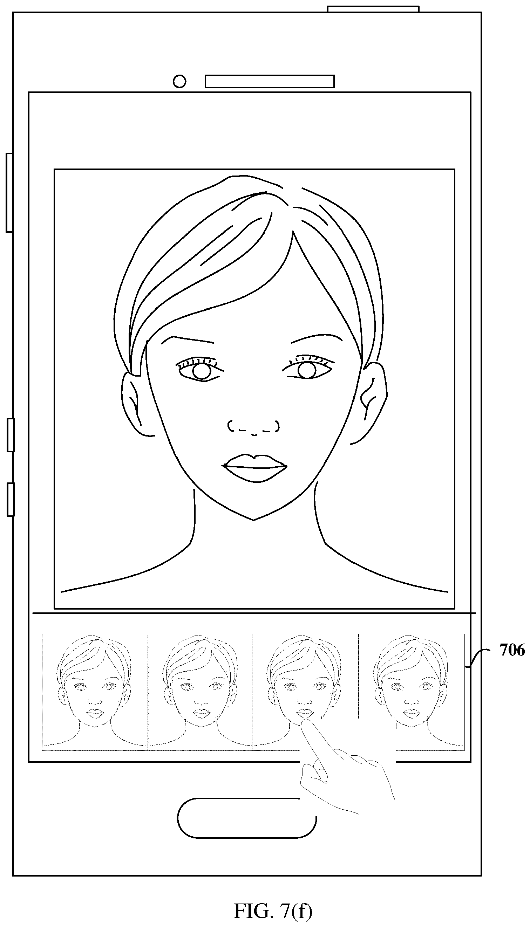

For example, an embodiment of this application provides a schematic diagram of a user graphical interface. As shown in FIG. 7(a), a user taps an icon 701 of a camera application to start the camera application, and a shooting interface shown in FIG. 7(b) is displayed. The user touches and holds a shooting button 702 to trigger a burst shooting function. An electronic device 100 sends a plurality of groups of collected raw data to a cloud server 200 for processing, where each group of raw data may correspond to one shot image. The electronic device 100 may locally store at least one thumbnail sent by the cloud server 200, where each thumbnail is generated based on one group of raw data. If the user subsequently wants to view burst shot images, the user may trigger a gallery display interface 703, as shown in FIG. 7(c). In this case, the electronic device may directly display the stored at least one thumbnail in an area 704 at the bottom of the gallery display interface, as shown in FIG. 7(d). Certainly, the thumbnail may alternatively be displayed in a side area or an upper area, or at another position in the gallery display interface. A position for displaying the thumbnail is not limited in this application. As shown in FIG. 7(e), when the user taps a thumbnail, for example, taps 705, an image corresponding to the thumbnail is displayed in a middle position in the gallery display interface. In some possible instances, if the currently displayed thumbnail does not include a thumbnail that the user is interested in, the user may slide a list of displayed thumbnails to display several new thumbnails, so that the user reselects a thumbnail that the user is interested in. As shown in FIG. 7(f), the user may swipe leftward or rightward the list of thumbnails, and tap a new thumbnail, for example, tap 706.

According to the foregoing method, image generation and image storage of the electronic device are migrated to and performed by the cloud server. This breaks limitations on a computing capability and a storage capability of the electronic device, prolongs burst shooting performed by the user, increases burst shooting use scenarios, increases a possibility that the user selects an optimal image, and further improves user experience.

The following uses three specific instances as examples to describe the foregoing method provided in this application.

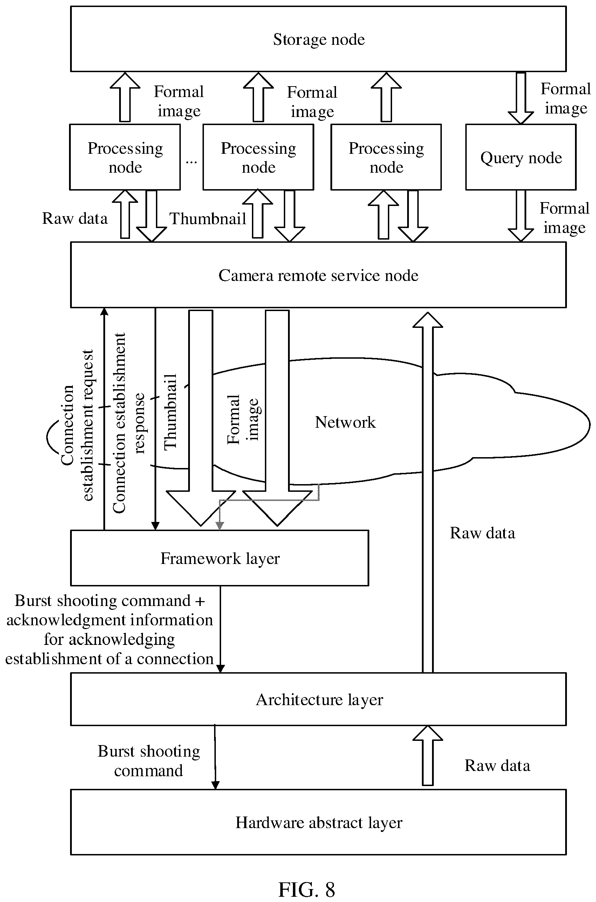

Instance 1: Descriptions are provided by using an example that a system performs the foregoing method. For example, FIG. 8 is a schematic flowchart of another image processing method according to an embodiment of this application. In FIG. 8, the system includes an electronic device and a cloud server. The electronic device includes an application (APP) layer, a framework (Framework) layer, and a hardware abstract layer (hardware abstract layer, HAL). In this application, the application layer includes a camera application. The cloud server includes: a camera remote server (camera remote server) node, at least one processing (computing) node, a storage (storage) node, and a query (query) node. A quantity of nodes included in the cloud server is not limited. The camera remote service node, referred to as a service node hereinafter, may be configured to interact with the electronic device. The processing node is configured to process data received from the electronic device. The storage node is configured to store a thumbnail and/or an image generated by the cloud server. The query node is configured to query the thumbnail and/or the image from the storage node.
(1) The electronic device starts the camera application.
(2) The electronic device detects a burst shooting command used to enable burst shooting.
(3) The camera application at the application layer establishes a connection to the cloud server. For example, the camera application may send a connection establishment request to the camera remote service node of the cloud server. If the cloud server agrees to establish the connection, the camera remote service node sends a connection establishment response to the camera application. The response includes acknowledgment information for acknowledging establishment of the connection, for example, an acknowledgment (acknowledgement, ACK).
(4) The application layer sends the burst shooting command and the acknowledgment information for acknowledging establishment of the connection to the framework.
(5) The framework delivers the burst shooting command to the HAL.
(6) After receiving the burst shooting command, the HAL establishes a connection to camera (Camera) hardware to collect raw data for images, and sends the raw data collected by the camera hardware to the framework, so that the framework transmits the raw data to the service node of the cloud server through a network, and the service node transmits the raw data to the processing node.
(7) After receiving the raw data, the processing node generates thumbnails and images based on the raw data. Optionally, the generated images may be numbered, to facilitate subsequent query. It may be understood that a common shooting mode does not require algorithm processing, and a non-common shooting mode such as a wide aperture shooting mode or a beauty shooting mode requires corresponding algorithm processing.
(8) The processing node transmits the generated thumbnails to the service node, and the service node transmits the thumbnails to the application layer of the electronic device through the network.
(9) Further, the electronic device may display the thumbnails, so that the user may select, based on the displayed thumbnails, a thumbnail that the user is interested in, and the electronic device may send a request message to the service node, to request a formal image corresponding to the thumbnail that the user is interested in.
(10) Further, the service node notifies the query node, and the query node may query the formal image corresponding to the thumbnail that the user is interested in from the storage node.
(11) After finding the formal image corresponding to the thumbnail that the user is interested in, the query node sends the formal image to the service node, and the service node sends the formal image to the electronic device through the network.
(12) The electronic device may display the received formal image.

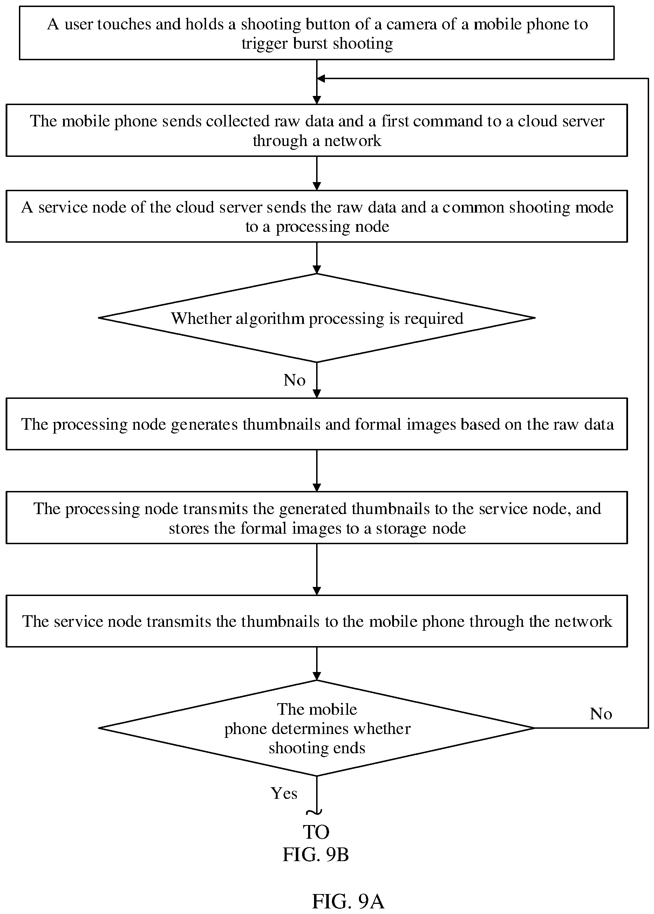

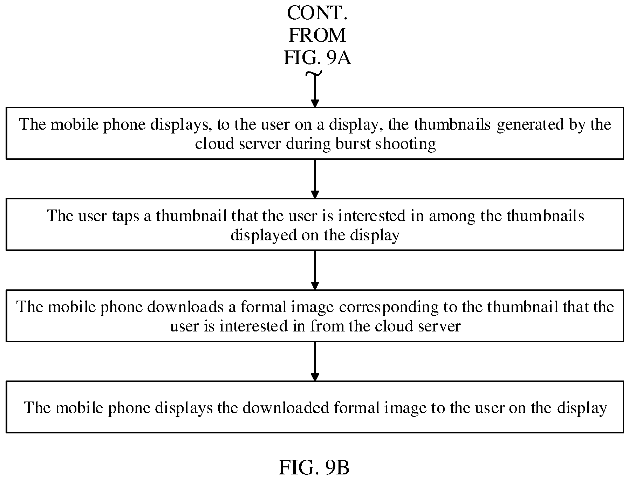

Instance 2: For example, FIG. 9A and FIG. 9B are a schematic flowchart of still another image processing method according to an embodiment of this application. In FIG. 9A and FIG. 9B, descriptions are provided by using an example in which a shooting mode is a common shooting mode and an electronic device is a mobile phone. The method includes the following steps.
(1) A user touches and holds a shooting button of a camera of the mobile phone to trigger a burst shooting function and collect raw data for images to be shot by using the camera.
(2) The mobile phone sends the collected raw data and a first command to a service node of a cloud server through a network, where the first command includes a common shooting mode. For a function of the first command, refer to details described above.
(3) The service node of the cloud server sends the raw data and the common shooting mode to a processing node.
(4) The processing node determines, based on the shooting mode, whether algorithm processing is required. When the shooting mode is the common shooting mode, the processing node determines that algorithm processing is not required. When the shooting mode is a non-common shooting mode, for example, a wide aperture shooting mode or a beauty shooting mode, the processing node determines that corresponding wide aperture algorithm processing or skin beautification algorithm processing is required. In this instance, because the shooting mode is the common shooting mode, the processing node does not need to perform the algorithm processing.
(5) The processing node generates thumbnails and formal images based on the raw data.
(6) The processing node transmits the generated thumbnails to the service node, and stores the formal images to a storage node.
(7) The service node transmits the thumbnails to the mobile phone through the network.
(8) The mobile phone determines whether shooting ends. If the shooting ends, the following steps are performed; or if the shooting does not end, steps (2) to (7) are repeatedly performed.
(9) The mobile phone displays, to the user on a display, the thumbnails generated by the cloud server during burst shooting.
(10) The user taps a thumbnail that the user is interested in among the thumbnails displayed on the display.
(11) The mobile phone downloads a formal image corresponding to the thumbnail that the user is interested in from the cloud server.
(12) The mobile phone displays the downloaded formal image to the user on the display, so that the user can view or further select an image that the user is interested in from the formal image.

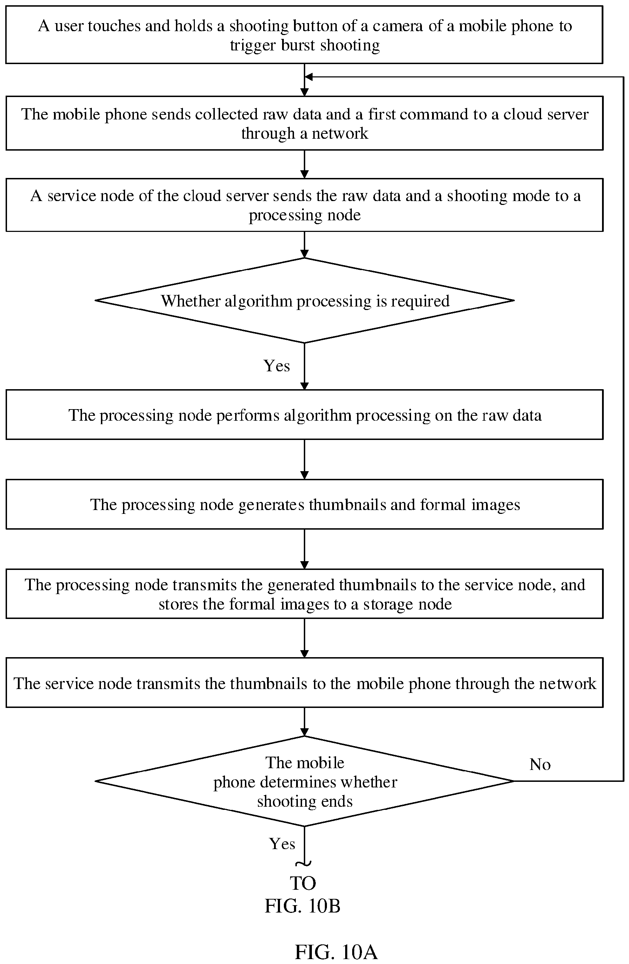

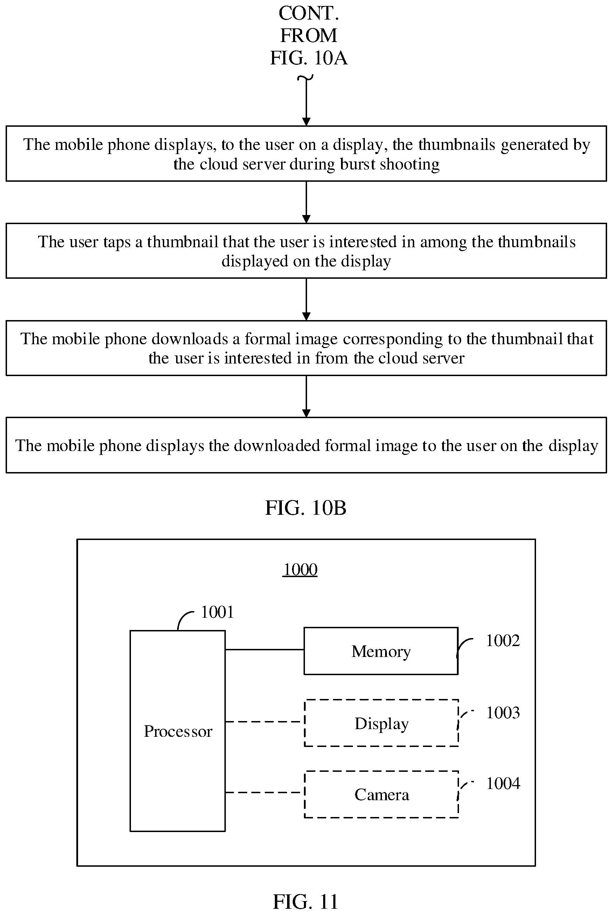

Instance 3: For example, FIG. 10A and FIG. 10B are a schematic flowchart of still another image processing method according to an embodiment of this application. In FIG. 10A and FIG. 10B, descriptions are provided by using an example in which a shooting mode is a beauty shooting mode or a wide aperture shooting mode and an electronic device is a mobile phone. The method includes the following steps.
(1) A user touches and holds a shooting button of a camera of the mobile phone to trigger a burst shooting function and collect raw data for images to be shot by using the camera.
(2) The mobile phone sends the collected raw data and a first command to a service node of a cloud server through a network, where the first command includes a non-common shooting mode such as the beauty shooting mode or the wide aperture shooting mode. For a function of the first command, refer to details described above.
(3) The service node of the cloud server sends the raw data and the shooting mode to a processing node.
(4) The processing node determines, based on the shooting mode, whether algorithm processing is required. When the shooting mode is a common shooting mode, the processing node determines that algorithm processing is not required. When the shooting mode is the non-common shooting mode, for example, the wide aperture shooting mode or the beauty shooting mode, the processing node determines that corresponding wide aperture algorithm processing or skin beautification algorithm processing is required. In this example, because the shooting mode is the non-common shooting mode, the processing node needs to perform the algorithm processing.
(5) The processing node performs the algorithm processing on the raw data. For example, when the shooting mode is the beauty shooting mode, the processing node generates corresponding beauty images and thumbnails according to a beauty algorithm and the raw data.
(6) The processing node generates thumbnails and formal images based on data processed according to the algorithm.
(7) The processing node transmits the generated thumbnails to the service node, and stores the formal images to a storage node.
(8) The service node transmits the thumbnails to the mobile phone through the network.
(9) The mobile phone determines whether shooting ends. If the shooting ends, the following steps are performed; or if the shooting does not end, steps (2) to (8) are repeatedly performed.
(10) The mobile phone displays, to the user on a display, the thumbnails generated by the cloud server during burst shooting.
(11) The user taps a thumbnail that the user is interested in among the thumbnails displayed on the display.
(12) The mobile phone downloads a formal image corresponding to the thumbnail that the user is interested in from the cloud server.
(13) The mobile phone displays the downloaded formal image to the user on the display, so that the user can view or further select an image that the user is interested in from the formal image.

The foregoing embodiments may be used separately, or may be used in combination to achieve different technical effects.

In the foregoing embodiments provided in this application, the method provided in the embodiments of this application is described from a perspective in which the electronic device is used as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the functions is performed by the hardware structure, the software module, or the combination of the hardware structure and the software module depends on specific applications and design constraint conditions of the technical solutions.

As shown in FIG. 11, an embodiment of this application discloses an electronic device 1000. The electronic device 1000 may include one or more processors 1001 and a memory 1002. In some embodiments, the foregoing components may be connected by using one or more communications buses. In addition, the foregoing components in this embodiment of this application may be connected in another manner.

The memory 1002 stores one or more computer programs, and the one or more computer programs include instructions. The processor 1001 invokes the instructions stored in the memory 1002, so that the electronic device 1000 performs the image processing method shown in FIG. 6, FIG. 7(a) to FIG. 7(f), FIG. 8, FIG. 9A and FIG. 9B, or FIG. 10A and FIG. 10B in the embodiments of this application.

In this embodiment of this application, the processor 1001 may be a general-purpose processor, a digital signal processor, an application-specific integrated circuit, a field programmable gate array or another programmable logic device, a discrete gate or a transistor logic device, or a discrete hardware component, and may implement or perform the methods, the steps, and logical block diagrams disclosed in the embodiments of this application. The general-purpose processor may be a microprocessor, any conventional processor, or the like. The steps of the methods disclosed with reference to the embodiments of this application may be directly performed by a hardware processor, or may be performed by using a combination of hardware in the processor and a software module. The software module may be located in the memory 1002. The processor 1001 reads the program instructions in the memory 1002, and completes the steps of the foregoing methods in combination with hardware of the processor 1001.

In this embodiment of this application, the memory 1002 may be a non-volatile memory, for example, a hard disk (hard disk drive, HDD) or a solid-state drive (solid-state drive, SSD), or may be a volatile memory (volatile memory), such as a random-access memory (random-access memory, RAM). The memory may alternatively be any other medium that can be used to carry or store desired program code in a form of an instruction or a data structure and that can be accessed by a computer. However, this is not limited thereto. The memory in this embodiment of this application may alternatively be a circuit or any other apparatus that can implement a storage function, and is configured to store instructions and/or data.

In some embodiments, the electronic device 1000 may display an image by using an external display, and collect an image by using an external camera.

In some other embodiments, the electronic device 1000 in this embodiment of this application further includes a display 1003 and a camera 1004. For example, the display 1003 is configured to display an image, and the camera 1004 is configured to collect an image.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in the embodiments.

In addition, function units in the embodiments of this application may be integrated into one processing unit, or each of the units may exist alone physically, or two or more units may be integrated into one unit.

According to the context, the term "when" used in the foregoing embodiments may be interpreted as a meaning of "if', "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present invention are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

A part of this patent application document includes the content protected by the copyright. The copyright owner reserves the copyright except copies made for the patent documents or the recorded content of the patent documents in the Patent Office.

## Claims

1. An image processing method, applied to an electronic device, wherein the electronic device comprises a camera and a display, and the method comprises:
detecting, by the electronic device, a first operation for enabling burst shooting;
obtaining, by the electronic device in response to the first operation, at least two groups of raw data collected by the camera, wherein each group of raw data corresponds to one image;
sending, by the electronic device, the at least two groups of raw data to a cloud server, so that the cloud server generates, based on each group of raw data, a corresponding thumbnail and an image corresponding to the thumbnail;
receiving, by the electronic device, at least one thumbnail from the cloud server, wherein each thumbnail is generated based on one group of raw data;
displaying, by the electronic device, the at least one thumbnail on the display;
detecting, by the electronic device, a second operation for selecting a first thumbnail comprised in the at least one thumbnail;
sending, by the electronic device, a request message to the cloud server in response to the second operation, wherein the request message is used to request a first image corresponding to the first thumbnail;
receiving, by the electronic device, the first image from the cloud server; and
displaying, by the electronic device, the first image on the display.

2. The method according to claim 1, wherein the method further comprises:
sending, by the electronic device, a first command to the cloud server, wherein the first command is used to instruct the cloud server to generate, based on the raw data, the thumbnail and the image corresponding to the thumbnail.

3. The method according to claim 2, wherein the first command comprises a shooting mode and/or a resolution of an image captured by the camera, and the shooting mode comprises a common shooting mode, a beauty shooting mode, or a wide aperture shooting mode.

4. The method according to any one of claims 1 to 3, wherein after the receiving, by the electronic device, the first image from the cloud server, the method further comprises:
storing, by the electronic device, the first image; and
sending, by the electronic device, a second command to the cloud server, wherein the second command is used to instruct the cloud server to delete the first image and raw data used to generate the first image.

5. An image processing method, applied to a cloud server, wherein the method comprises:
receiving, by the cloud server, at least two groups of raw data from an electronic device, wherein each group of raw data corresponds to one image;
generating, by the cloud server, one thumbnail and one image based on each group of raw data, wherein the thumbnail and the image that are generated based on the same raw data have a correspondence;
sending, by the cloud server, at least one thumbnail to the electronic device;
receiving, by the cloud server, a request message from the electronic device, wherein the request message is generated after the electronic device detects, after the electronic device displays the at least one thumbnail on a display, a second operation for selecting a first thumbnail comprised in the at least one thumbnail, and the request message is used to request a first image corresponding to the first thumbnail; and
sending, by the cloud server, the first image to the electronic device in response to the request message.

6. The method according to claim 5, wherein before the generating, by the cloud server, one thumbnail and one image based on each group of raw data, the method further comprises:
receiving, by the cloud server, a first command from the electronic device, wherein the first command is used to instruct the cloud server to generate, based on the raw data, the thumbnail and the image corresponding to the thumbnail.

7. The method according to claim 6, wherein the first command comprises a shooting mode and/or a resolution of an image captured by the camera, and the shooting mode comprises a common shooting mode, a beauty shooting mode, or a wide aperture shooting mode; and
the generating, by the cloud server, one thumbnail and one image based on each group of raw data comprises:
generating, by the cloud server, one thumbnail and one image based on each group of raw data, and the shooting mode and/or the resolution of the image captured by the camera.

8. The method according to any one of claims 5 to 7, further comprising:
receiving, by the cloud server, a second command from the electronic device, wherein the second command is used to instruct the cloud server to delete the first image and raw data used to generate the first image; and
deleting, by the cloud server according to the second command, the first image and the raw data used to generate the first image.

9. An electronic device, wherein the electronic device comprises a camera, a display, a transceiver, one or more processors, and a memory, wherein
the memory stores one or more computer programs, the one or more computer programs comprise instructions, and when the instructions are executed by the electronic device, the electronic device is enabled to perform the following steps:
detecting a first operation for enabling burst shooting;
obtaining, in response to the first operation, at least two groups of raw data collected by the camera, wherein each group of raw data corresponds to one image;
sending the at least two groups of raw data to a cloud server, so that the cloud server generates, based on each group of raw data, a corresponding thumbnail and an image corresponding to the thumbnail;
receiving at least one thumbnail from the cloud server, wherein each thumbnail is generated based on one group of raw data;
displaying the at least one thumbnail on the display;
detecting a second operation for selecting a first thumbnail comprised in the at least one thumbnail;
sending a request message to the cloud server in response to the second operation, wherein the request message is used to request a first image corresponding to the first thumbnail;
receiving the first image from the cloud server; and
displaying the first image on the display.

10. The electronic device according to claim 9, wherein when the instructions are executed by the electronic device, before the electronic device receives the at least one thumbnail from the cloud server, the electronic device is further enabled to perform the following step:
sending a first command to the cloud server, wherein the first command is used to instruct the cloud server to generate, based on the raw data, the thumbnail and the image corresponding to the thumbnail.

11. The electronic device according to claim 10, wherein the first command comprises a shooting mode and/or a resolution of an image captured by the camera, and the shooting mode comprises a common shooting mode, a beauty shooting mode, or a wide aperture shooting mode.

12. The electronic device according to any one of claims 9 to 11, wherein when the instructions are executed by the electronic device, after the electronic device receives the first image from the cloud server, the electronic device is further enabled to perform the following steps:
storing the first image; and
sending a second command to the cloud server, wherein the second command is used to instruct the cloud server to delete the first image and raw data used to generate the first image.

13. A cloud server, wherein the cloud server comprises a transceiver, a processor, and a memory, wherein
the memory stores one or more computer programs, the one or more computer programs comprise instructions, and when the instructions are executed by the cloud server, the cloud server is enabled to perform the following steps:
receiving at least two groups of raw data from an electronic device, wherein each group of raw data corresponds to one image;
generating one thumbnail and one image based on each group of raw data, wherein the thumbnail and the image generated based on the same raw data have a correspondence;
sending at least one thumbnail to the electronic device;
receiving a request message from the electronic device, wherein the request message is generated after the electronic device detects, after the electronic device displays the at least one thumbnail on a display, a second operation for selecting a first thumbnail comprised in the at least one thumbnail, and the request message is used to request a first image corresponding to the first thumbnail; and
sending the first image to the electronic device in response to the request message.

14. The cloud server according to claim 13, wherein when the instructions are executed by the cloud server, before the cloud server generates one thumbnail and one image based on each group of raw data, the cloud server is further enabled to perform the following step:
receiving a first command from the electronic device, wherein the first command is used to instruct the cloud server to generate, based on the raw data, the thumbnail and the image corresponding to the thumbnail.

15. The cloud server according to claim 14, wherein the first command comprises a shooting mode and/or a resolution of an image captured by the camera, and the shooting mode comprises a common shooting mode, a beauty shooting mode, or a wide aperture shooting mode; and
the generating one thumbnail and one image based on each group of raw data comprises:
generating one thumbnail and one image based on each group of raw data, and the shooting mode and/or the resolution of the image captured by the camera.

16. The cloud server according to any one of claims 13 to 15, wherein when the instructions are executed by the cloud server, after the cloud server sends the first image to the electronic device, the cloud server is further enabled to perform the following steps:
receiving a second command from the electronic device, wherein the second command is used to instruct the cloud server to delete the first image and raw data used to generate the first image; and
deleting, according to the second command, the first image and the raw data used to generate the first image.

17. A computer-readable storage medium, comprising instructions, wherein when the instructions are run on an electronic device, the electronic device is enabled to perform the method according to any one of claims 1 to 4.

18. A computer-readable storage medium, comprising instructions, wherein when the instructions are run on a cloud server, the cloud server is enabled to perform the method according to any one of claims 5 to 8.

19. A communications apparatus, comprising a processor and a memory, wherein
the memory is configured to store a computer program; and
the processor is configured to execute the computer program to implement the method according to any one of claims 1 to 4.

20. A communications apparatus, comprising a processor and a memory, wherein
the memory is configured to store a computer program; and
the processor is configured to execute the computer program to implement the method according to any one of claims 5 to 8.

21. A communications system, comprising the electronic device according to any one of claims 9 to 12 or the communications apparatus according to claim 19, and comprising the cloud server according to any one of claims 13 to 16 or the communications apparatus according to claim 20.

22. A chip, comprising a processor, wherein the processor is coupled to a memory, and the chip is configured to read and execute instructions stored in the memory, to perform the method according to any one of claims 1 to 4.

23. A chip, comprising a processor, wherein the processor is coupled to a memory, and the chip is configured to read and execute instructions stored in the memory, to perform the method according to any one of claims 5 to 8.

24. A computer program product, comprising a program or instructions, wherein when the program or the instructions are run on a computer, the method according to any one of claims 1 to 4 is performed.

25. A computer program product, comprising a program or instructions, wherein when the program or the instructions are run on a computer, the method according to any one of claims 5 to 8 is performed.
